(19) **Europäisches Patentamt / European Patent Office / Office européen des brevets**

(11) **EP 3 278 037 B1**

(12) **EUROPEAN PATENT SPECIFICATION**

(45) Date of publication and mention
of the grant of the patent:
**25.08.2021 Bulletin 2021/34**

(21) Application number: **16715721.3**

(22) Date of filing: **29.03.2016**

(51) Int Cl.:
*F24S 23/71* *(2018.01)* *F24S 90/00* *(2018.01)*
*F24S 20/20* *(2018.01)* *F24S 10/80* *(2018.01)*
*F24S 70/16* *(2018.01)* *C01B 13/02* *(2006.01)*
*C01B 3/04* *(2006.01)*

(86) International application number:
**PCT/US2016/024646**

(87) International publication number:
**WO 2016/160768 (06.10.2016 Gazette 2016/40)**

(54) **ULTRA-HIGH TEMPERATURE SOLAR-DRIVEN GAS HEATING SYSTEM**

SOLARBETRIEBENES ULTRAHOCHTEMPERATUR-GASHEIZUNGSSYSTEM

SYSTÈME DE CHAUFFAGE DE GAZ SOLAIRE À ULTRA-HAUTE TEMPÉRATURE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.03.2015 US 201514673210**

(43) Date of publication of application:
**07.02.2018 Bulletin 2018/06**

(73) Proprietor: **Stellar Generation, Inc.
Dallas, Texas 75225 (US)**

(72) Inventor: **ELKIND, Jerome Lee
Dallas, Texas 75225 (US)**

(74) Representative: **Fish & Richardson P.C.
Highlight Business Towers
Mies-van-der-Rohe-Straße 8
80807 München (DE)**

(56) References cited:
WO-A1-2008/153922      US-A- 4 053 576
US-A- 4 120 663          US-A- 4 405 594
US-A- 4 696 809          US-A1- 2006 048 808
US-A1- 2008 173 533      US-B1- 8 709 132

• R. C. Buchanan ET AL: "Optical and Electrical
Properties of Yttria Stabilized Zirconia (YSZ)",
Journal of the Electrochemical Society, 21
September 1982 (1982-09-21), pages 962-966,
XP055550151, Retrieved from the Internet:
URL:http://jes.ecsdl.org/content/130/4/962 .full.p
df#page=1&view=FitH [retrieved on 2019-01-31]

## Description

### CLAIM OF PRIORITY

This application claims priority to U.S. Patent Application No. 14/673,210 filed on March 30, 2015.

### TECHNICAL FIELD

This implementation relates to a system and a method for using focused light to heat a fluid to ultra-high temperatures.

### BACKGROUND

On-going geo-political concerns, concerns for global warming, and rising oil prices are fueling the push for renewable energy sources such as wind and solar power. Today, the majority of the electricity generated in the United States is produced by burning fossil fuels, such as coal, natural gas, and petroleum, nuclear power and hydroelectric power. Energy produced from alternative energy sources, such as wind and solar power, account for a small percentage of the total electricity produced in the United States. Our reliance on fossil fuels and nuclear power has several drawbacks. While fossil fuels are comparatively inexpensive, there is only a limited supply of fossil fuels, which will eventually be depleted if alternative energy sources are not found. Further, the burning of fossil fuels to produce electricity emits greenhouse gases that contribute to global warming. Nuclear power presents environmental and nuclear proliferation hazards.

Solar energy and wind power are promising alternative energy sources that can reduce reliance on fossil fuels for generating electricity. Solar energy and wind power are renewable resources so there is no concern about future depletion of these resources. Further, the generation of electricity from solar energy and wind power does not emit greenhouse gases and is therefore considered more environmentally friendly. Also, generation of electricity from renewable energy sources does not generate hazardous byproducts that need to be disposed of.

In the field of solar energy utilization, much work has been done to develop a system that is economical enough to replace the combustion of fossil fuels to supply the growing needs of our ever more highly populated planet in a clean and renewable way. Solar photovoltaic systems have received the most attention over the years and yet suffer from a very high cost of equipment. Even with government subsidies, 25-year payback periods are common. In addition, because electricity is expensive to store, the use of periodic energy sources such as wind and solar to produce electric power is problematic.

A better approach would be to use solar energy to produce a fuel, which could be stored and transported easily and economically. This fact has led to a great deal of research into ways to use sunlight to produce fuels from low energy feedstock, most notably to produce hydrogen from water. This arises largely from the well-known fact that hydrogen, when used as a fuel produces only water, which truly makes hydrogen a "clean fuel" candidate. Despite the large body of work on this topic there is not yet an economical process in practice.

Electricity for electrolyzing water may come from renewable resources such as solar or wind, but ~60kWhr is required to produce 1kg of hydrogen from water electrolytically. This limitation renders this process too expensive to compete in the energy marketplace with fossil fuels.

Direct thermal decomposition of water has been proposed as a possible way to avoid the inefficiencies and expense of the photon-to-electron conversion step that limits the aforementioned solar electrolysis system approach. The following formula illustrates the decomposition:

$$2H_2O + Heat \leftrightarrow 2H_2 + O_2 \qquad (1)$$

To generate thermal decomposition of water, ultra-high temperatures are required to produce appreciable amounts of reaction products, i.e., hydrogen and oxygen. For example, at equilibrium, 2% of water decomposes at a temperature of 1800°C and at a pressure of 760 Torr. Direct absorption of sunlight by water vapor, or any gas for that matter, is not practical because of the very wide wavelength distribution in sunlight as well as the very small absorption cross section for most gases at most wavelengths.

Documents US 8,709,132 B1 and US 4,696,809 describe a system and method for separating hydrogen from disassociated water .

### SUMMARY

An intermediate material may be able to substantially absorb concentrated sunlight and also to substantially transfer the generated heat to the fluid. However, the high temperatures needed to disassociate water imposes very strict requirements on such an intermediate light-absorbing and heat transferring materials, because they may withstand very high temperatures and may do so even when exposed to very reactive gases. Thermal shock, resulting in mechanical degradation, such as crack formation, can be caused by, for example, very large thermal gradients. Mismatches in thermal expansion coefficients among different construction materials can also cause cracking and mechanical failure.

Indeed the challenges associated with designing a light-absorbing and heat transferring system that is comprised of a material that is capable of (1) absorbing highly concentrated sunlight to achieve ultrahigh temperatures that will support, for example, water vapor decomposition and (2) transferring that heat to, for example, water vapor, are severe. Specifically, the light-absorbing and heat transferring material may be substantially dark in order to absorb the largely visible light that makes up sunlight. And it may be stable at the extremely high temperatures required to decompose water both in regards to the inherent mechanical stresses as well as the chemical environment. Specifically, in order for the light-absorbing and heat transferring material to elevate the temperature of water vapor to, say, 1800°C, the light-absorbing and heat transferring material itself may withstand temperatures in excess of 2000°C without substantially melting, cracking, vaporizing or reacting and this is a very stringent requirement. In some implementations, the light-absorbing and heat transferring material is to remain absorptive (dark) over a period of time. In other words, the light-absorbing and heat transferring material may not appreciably bleach out or otherwise lose color.

Since light absorption is a nonlinear process, a uniformly absorbing material will tend to be heated in a non-uniform manner. That is, a uniformly absorbing material or element will absorb more light on the side where the light is incident and on the back end it will tend to absorb less light and therefore experience less heating. Non-uniform heating can lead to large thermal gradients which can then lead to mechanical degradation (cracking and crazing) as well as to non-optimal heat transfer profiles. This non-uniform heating effect can be mitigated by making the top of the element somewhat less absorbing than the bottom of the element. This can be done in a hybrid fashion where a less absorbing element is stacked on top of a darker absorbing element or it can be done in a monolithic manner by using material that has been produced with an appropriate absorption gradient.

In general, when considering the case of heating water vapor, this extreme thermal and chemical environment excludes all but very stable solid oxide ceramic materials. Unfortunately, many of the highest melting oxides, including zirconia, hafnia and yttria, for example, are not naturally dark in color. In fact most are white in polycrystalline form and colorless in crystalline form and would therefore not absorb most solar radiation. The coloring of otherwise light-colored polycrystalline ceramic materials such as zirconia is generally accomplished by adding a colored powder to the ceramic paste mixture prior to forming and sintering the final polycrystalline part. For example, oxides of iron, cobalt and/or manganese are commonly added to zirconia paste to make black polycrystalline zirconia elements such as knives and watch bodies. This works well for most applications, however, for extremely high temperature applications such as a light-absorbing and heat transferring material for the thermal decomposition of water vapor, the pigments, which are generally lower melting and higher vapor pressure oxides, so applied, are not sufficiently stable and will, upon heating, exit the polycrystalline material substantially along the many grain boundaries. And as soon as the surface begins to bleach or lighten in color it also begins to reflect more and more light and its ability to absorb light is greatly reduced.

When more moderate temperatures are required, say 1000°C or less, there are many options, including standard polycrystalline ceramics that have had blackening agents mixed in. But at such moderate temperatures, processes like the direct thermal decomposition of water produce hydrogen and oxygen at such miniscule partial pressures that separations are extremely difficult and the overall process becomes overly inefficient and commercially non-viable.

According to the invention, the light-absorbing and heat transferring material may be a monocrystalline ceramic oxide material with a very high melting point, such as cubic zirconia, that has been doped during crystal growth with metal ions to provide the crystal with a color that may assist with light absorption. Using a monocrystalline ceramic material for the light-absorbing and heat transferring material, rather than a more conventional polycrystalline ceramic material, assists in retaining its color by eliminating or otherwise reducing grain boundaries because diffusion of atoms through a crystal lattice is generally much slower than diffusion along grain boundaries of polycrystalline materials. Even then, the color stability of a given pigment ion also depends on its natural mobility inside the crystal lattice. For example, cerium oxides are routinely used to dope cubic zirconia to produce orange crystals. However, upon heating to 1700°C, cubic zirconia doped with cerium oxide quickly loses substantially all of its color. On the other hand, when cobalt oxide is used as a pigment in cubic zirconia to make a purple color, even after many hours at over 1700°C the coloration of this crystal remains substantially the same.

In addition, the size of each individual piece or element of light-absorbing and heat transferring material may be significantly smaller in the directions that are perpendicular to the direction of the light beam than the width of the incoming focused light beam. In this way, it is far less likely that the beam will impinge on only a small portion of any single light-absorbing and heat transferring element and this will reduce thermal shock induced breakage of the light-absorbing and heat transferring material. For example, a concentrating solar optic useful in water pyrolysis might concentrate sunlight by 5000 times. For a 48" diameter optic, a spot size with a diameter of about 23mm may be created. In this case, by keeping each individual piece of heater material at or below 3mm in length and width (or diameter for spheres or cylinders), the likelihood that an individual light-absorbing and heat transferring element would only be partially illuminated and thereby experience substantial thermal gradients may be reduced. In some implementations, the surface of each individual light-absorbing and heat transferring element may be polished smooth to both allow light to enter the crystal for absorption and also to reduce the likelihood of cracking. In some implementations, the individual light-absorbing and heat transferring elements can be held in a pocket made of material that substantially fixes the light-absorbing and heat transferring material in space while being able to sustain the associated thermal stresses. In addition, the holder may direct super-heated vapor toward a downstream gas separation system without substantial cooling. In these instances, oxygen may be removed from the partially decomposed water vapor stream at a temperature that is close to that at which the water decomposition took place.

Other substantially monocrystalline ceramic materials may be utilized without departing from the scope of this invention. For example, hafnia, yttria and alumina are just a few examples of materials with very high melting points that can be produced in a substantially monocrystalline form and that can be doped to provide them with specific light absorption properties and utilized as light-absorbing and heat transferring materials.

Other vapors and other reactions such the thermal decomposition of carbon dioxide, shown below, for example, could be driven in an analogous manner.

$$2CO_2 + heat \leftrightarrow 2CO + O_2 \qquad (2)$$

Some implementations may include one or more of the following advantages. Using monocrystalline ceramic oxide light-absorbing and heat transferring elements may maintain a desired color for a long period of time. In contrast, polycrystalline ceramic light-absorbing heater elements may bleach at ultra-high temperatures owing to the ease with which pigments can escape along grain boundaries. Using monocrystalline ceramic oxide light-absorbing and heat transferring elements that are naturally substantially sunlight-absorbing and that have been doped with or otherwise include metal ions to provide color to the crystal in such a way to enhance overall absorption of sunlight. Using a multitude of light-absorbing heater elements that are, each, small relative to the width of the focused beam, minimizing or otherwise reducing the likelihood of large temperature gradients in any element and further minimizing or reducing the likelihood of element cracking and/or crazing. Different shapes and sizes of substantially monocrystalline light absorbing and heat transferring elements can be used to maximize or increase both the fraction of light absorbed as well as the fraction of heat transferable to the fluid since heat transfer processes tend to be surface area-dependent. A holder that contains the monocrystalline ceramic oxide light-absorbing and heat transferring elements may be porous to minimize or reduce heat conduction away from the heating elements. In some instances, superheated gas may flow through these pores. In some implementations, a porous holder that includes channels formed, in addition to natural porosity, may further direct superheated gas from the heater region downstream to the separation region of the system.

The details of one or more implementations of the invention are set forth in the accompanying drawings and the description below. Other features, objects, and advantages of the implementation will be apparent from the description and drawings, and from the claims.

## DESCRIPTION OF DRAWINGS

FIGURE 1 is a block diagram illustrating an example ultra-high temperature solar-driven system in accordance with some implementations of the present disclosure, and
FIGURE 2 is a flow chart illustrating an example method for solar driven ultra-high temperature fluid production.

Like reference symbols in the various drawings indicate like elements.

## DETAILED DESCRIPTION

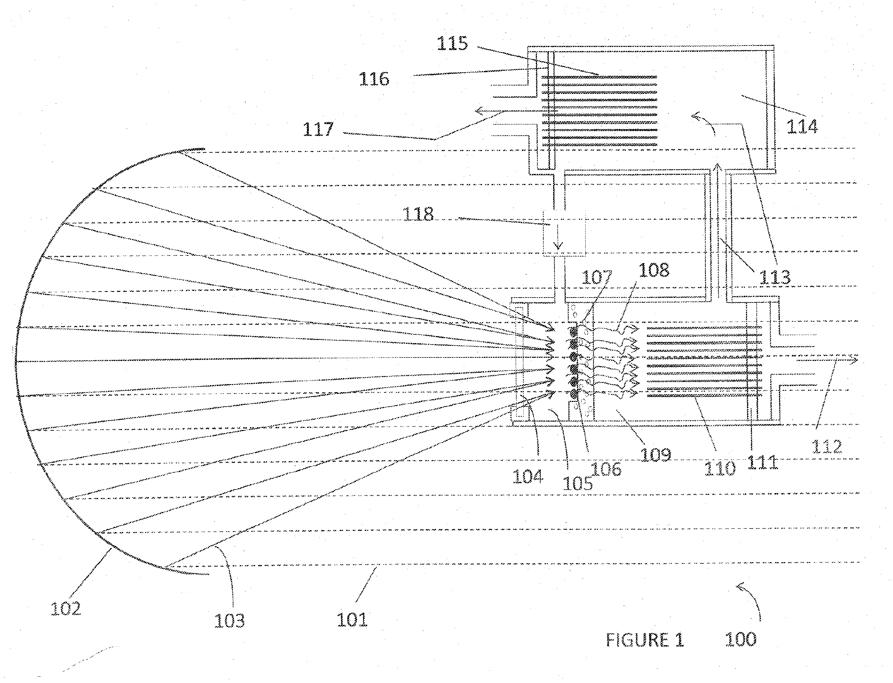

FIGURE 1 is a block diagram illustrating systems 100 for one or more monocrystalline elements to absorb concentrated light. For example, the system 100 may include crystals that are naturally dark or that are artificially doped with metal ions that sufficiently absorb light to reach ultra-high temperatures. These ultra-high temperatures may be used to disassociate water or other fluids. For example, the systems 100 may direct rays from the sun 101 to a reflector 102 (e.g. parabolic reflector) that produces focused light rays 103. The focused light rays 103 may be directed through a window 104, into a heating chamber 105, and onto light-absorbing and heat transferring elements 106. As illustrated, a holder 107 may contain the light-absorbing and heat transferring elements 106.

In some implementations, the light-absorbing and heat transferring elements 106 are configured to absorb at least a portion of the focused light rays 103 and to be in thermal communication with a stream of water vapor 108. Once the light-absorbing and heat transferring elements 106 are sufficiently heated, that heat may be transferred and thereby disassociate at least a portion of the water vapor 108 into hydrogen and oxygen. In other words, the thermal energy may break apart or otherwise disassociate water molecules and can be generated, in some implementations, by concentrating sunlight onto the light-absorbing and heat transferring elements 106. For example, the system 100 may concentrate sunlight in the range of about 2,000-10,000 suns (*e.g.,* 5,000) onto a monocrystalline material that is at least partially absorbing of concentrated sunlight. For example, the light-absorbing and heat transferring elements may have a total absorbance (A) for solar radiation of between 0.1 and 2.0 (e.g., 0.7), where absorbance is defined by:

$$A = 2 - \log_{10} TX\%$$

and where TX% is the percentage of incident light that is transmitted through the material.

The ultimate temperature to which the light absorbing and heat transferring elements 106 heat the water vapor is reached when the sum of the heat loss mechanisms (convection, conduction and radiation) is equal to the input power and this is dependent on system design. But in general, when thermal conduction is minimized by the proper use of thermal insulators, then radiation, which is proportional to $4^{th}$ power of the temperature, may not effectively compete with convection, which is the heat transfer mechanism by which the water vapor is heated, until ultrahigh temperatures (i.e. between 1500°C and 2000°C or higher (e.g., 1800°C) are reached.

In some implementations, the system 100 may include a plurality of concentrators (not shown) such as an array of mirrors or lenses to generate solar energy to sufficiently heat the light-absorbing and heat transferring elements 106. In doing so, the system 100 may convert at least a portion of incident solar energy to thermal energy sufficient to drive a process such as the disassociation of water. For example, the system 100 may concentrate solar energy on the light-absorbing and heat transferring elements 106 configured to both absorb at least a portion of the incident light (*e.g.*, visible, ultraviolet) and generate sufficient thermal energy (*e.g.*, reaching about 1,800 °C) to disassociate water. The superheated water vapor stream 108, which in this example also contains some hydrogen and oxygen, may, upon exiting the holder 107, enter into an oxygen separation chamber 109 containing one or more oxygen separation membranes 110. As illustrated, the oxygen separation membranes 110 are tubular and are typically held mechanically and hermetically in place by seals in an oxygen membrane flange 111. In this case, oxygen may be removed from the superheated water vapor stream 108 by the oxygen membranes 110, leaving a water vapor stream that is substantially rich in hydrogen. That is, one where there is a greater than stoichiometric amount of hydrogen relative to oxygen or where the hydrogen-to-oxygen ratio is greater than 2:1. The separated oxygen may then be removed from the inside of the oxygen membranes 110 in a separate stream 112, for example, by a vacuum pump (not shown). Continuing with this example, the hydrogen rich stream 113 may enter hydrogen separation chamber 114 containing one or more hydrogen separation membranes 115. In the illustrated implementation, the hydrogen separation membranes 115 may be fixed mechanically and hermetically sealed in a hydrogen membrane flange 116. Hydrogen may be removed from hydrogen-rich water vapor stream 113 by the hydrogen membranes 115. This hydrogen separation step may occur at a different temperature than that at which the oxygen separation took place. The separated hydrogen may then be removed from the inside of the hydrogen membranes 115 in a separate stream 117, for example, by a vacuum pump (not shown). The remaining water vapor stream may be conveyed back into the heater chamber 105 by an inline pump 118 to begin the cycle again. In some implementations, the systems 100 may execute one or more of the following: focus sunlight on a monocrystalline light-absorbing and heat transferring material; pass a fluid through or by the heated light-absorbing and heat transferring material that has been heated sufficiently to disassociate at least some of the water vapor so that a substantial portion of that heat is transferred to the fluid by convective, conductive and/or radiative processes; and recycle remaining water vapor.

Referring to FIGURE 1, the system 100 may include a transparent window 104 that allows focused sunlight 103 onto one or more monocrystalline light-absorbing and heat transferring elements 106 that may be naturally sunlight absorbing or that may have been grown with the addition of a dopant so as to be substantially light-absorbing. In some instances, doping may be performed post crystal growth using ion implantation and annealing, for example. The light-absorbing and heat transferring elements 106 may be heated by absorbing focused light while sitting in a holder 107 through or by which water vapor flows. The hot vapor stream 108 that emerges from the light-absorbing and heat transferring elements 106 and holder 107 may have been heated to temperatures sufficient to disassociate at least some of the water. In these instances, the hot water vapor stream 108 also contains hydrogen and oxygen.

As for a more detailed description, the monocrystalline ceramic elements 106 may include substantially monocrystalline materials that have high melting points, such as zirconia and hafnia, which melt at 2700°C and 2900°C, respectively. In addition, the materials may be resistant to oxidation because very high temperatures are generated for disassociation and superheated oxygen is very reactive. Additionally, the light-absorbing and heat transferring elements 106 may include dopants that provide color configured to absorb sunlight and is efficient at converting this light to heat. According to the invention, the light-absorbing and heat transferring elements 106 may include a naturally white or lightly-colored oxide-based ceramic (e.g., zirconia, alumina, magnesia and/or hafnia) that has been doped to include other atoms (e.g., metal ions which provide for light absorption (color) and also do not substantially leave the crystal lattice at ultra-high temperatures). In addition to being unreactive with hydrogen, oxygen and water at high temperatures and having a very high melting point, the light-absorbing and heat transferring elements 106 may also have low thermal conductivity (e.g., about 2 Watts/Meter/°K or less) to minimize or otherwise reduce the loss of system heat from a reaction zone and/or to simplify the system design. Disassociation of the water molecule is substantially accomplished by direct thermal decomposition at high temperatures as illustrated in Equation 1.

In some implementations, the light-absorbing and heat transferring elements 106 may be in the form of a plurality of spheres, cubes, cylinders, other shapes, or a combination thereof. As previously mentioned, the light-absorbing and heat transferring elements 106 may generate sufficient heat to disassociate water vapor using the incident solar energy or other highly concentrated forms of light such as a laser beam. The light-absorbing and heat transferring elements 106 may be smaller than the incident beam size, i.e., the beam diameter where it encounters the light-absorbing and heat transferring elements 106, to avoid or otherwise reduce the creation of large thermal gradients within individual light-absorbing and heat transferring elements. The light-absorbing and heat transferring elements 106 may be shaped to be optimized for convective heat transfer to the fluid and/or overall light absorption and thermal profile. The holder 107 may be pressed, molded, or otherwise formed ceramic body. It may be sintered before or after being formed. In some instances, the holder 107 may been machined, molded or otherwise formed to be able to position the light-absorbing and heat transferring elements 106 properly in relation to the focused light beam. In some implementations, at least portions of the holder 107 may be resistant to thermal shock. The holder 107 may be porous and/or may have holes or channels formed in it to further assist the transport of superheated gas to the next process area. The holder 107 may be formed from, for example, ceramic fiberboard, ceramic textiles, pressed ceramic powders or combinations thereof. Large thermal gradients within the holder 107 may be unavoidable and to avoid issues with thermal shock, a more loosely bonded arrangement of fiber such as pressed fiberboard, for example, may reduce the likelihood of thermal shock induced cracking.

In some implementations, the light-absorbing and heat transferring elements 106 may be substantially monocrystalline zirconia that has been stabilized in the cubic form by adding 8mole% or more yttrium oxide or 15mole% or more calcia to the melt prior to crystal growth and have additionally been doped with, for example, approximately 0.5% cobalt to provide a purple color. Other substantially monocrystalline ceramics that are naturally sufficiently absorptive of sunlight or that have been doped to be sufficiently absorptive of sunlight can also be light-absorbing and heat transferring elements 106. In some instances, these other crystals may possess the prescribed thermal, mechanical and chemical stability to substantially operate at an ultra-high temperatures light absorbing and heat transferring elements.

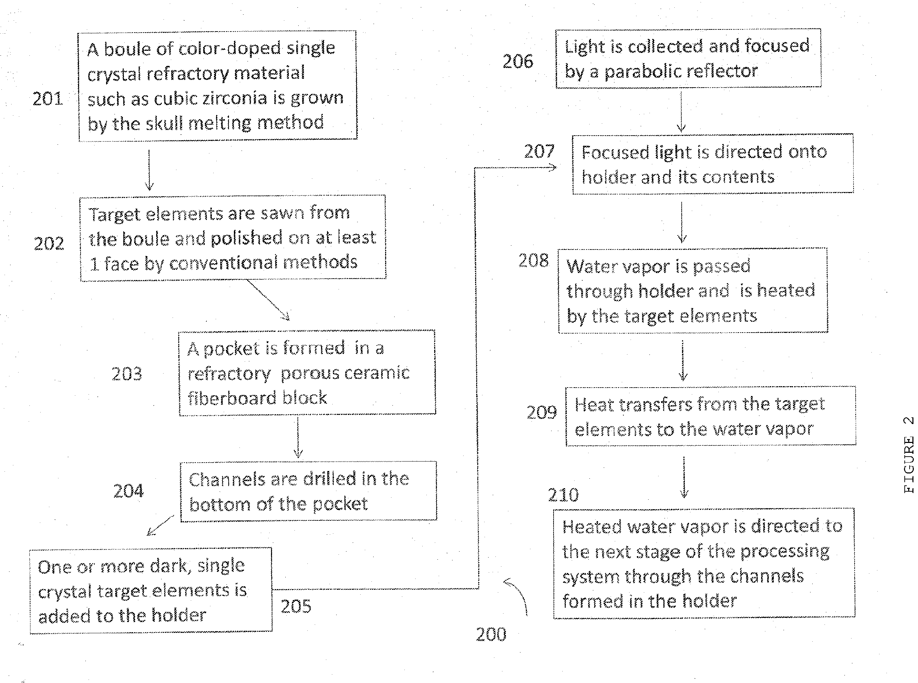

FIGURE 2 is a flow chart illustrating an example method 200 for using focused light to super heat a fluid stream as a part of an overall process containing at least 1 ultra-high temperature step in accordance with some implementations of the present disclosure. The illustrated method is described with respect to system 100 of FIGURE 1, but this method could be used by any other suitable system. Moreover, the system 100 may use any other suitable techniques for manufacturing the system 100. Thus, many of the steps in this flowchart may take place simultaneously and/or in different orders as shown. System 100 may also use methods with additional steps, fewer steps, and/or different steps, so long as the methods remain appropriate.

At a high level, method 200 includes the following processes: (1) growing refractory ceramic materials that are monocrystalline and that absorb sunlight and, from such a boule, cutting out and polishing individual pieces to form individual light-absorbing and heat transferring elements; (2) forming a holder to contain said light-absorbing and heat transferring elements; and (3) directing focused light onto said light-absorbing and heat transferring elements and transferring the resulting heat from the light-absorbing and heat transferring elements to a water vapor stream flowing through and past said substantially light-absorbing and heat transferring elements such that heat transfer will occur and the water vapor stream will be heated to ultra-high temperatures.

Method 200 begins at step 201 where monocrystalline cubic zirconia is grown by one of any number of methods including Skull Melting method. In step 201, a dopant is added to the melt mixture to ensure good light absorption properties. In step 202, the boule is sawn and otherwise processed to provide light-absorbing and heat transferring elements of a predefined shape and with at least one surface polished for light to substantially enter the crystal. For example, cubic zirconia "rough" may be sliced into 2mm thick wafers and then diced into 2mm cubes and then one or more of each of the cubes' 6 surfaces may be mechanically polished using diamond grit of decreasing particle size until each surface is substantially optically smooth. At step 203, a pocket is formed in a piece of porous ceramic fiberboard, and, in step 204, holes are drilled though the bottom of the fiberboard. For example, the fiberboard may be a disk that is 50mm in diameter and 8mm thick and the pocket, formed by a standard machining technique like milling, may be 20 mm in diameter and 4mm deep. The holes drilled in the bottom of the pocket may be 0.7mm in diameter and may form a square pattern with 1.5mm center-to-center spacing. In step 205, a single layer of 100 light-absorbing and heat transferring elements 106, which may be 2mm x 2mm x 2 mm cubes, may be placed in the pocket. At step 206, light is collected and focused by a solar concentrator. For example, the solar concentrator may be a parabolic dish that is, for example, 48 inches in diameter and focus light down to a circle with about a 23mm diameter. At step 207, focused light is directed onto the light-absorbing and heat transferring elements which are sitting in their holder such that the temperature of the target elements is elevated to substantially above 1800°C. At step 208, a stream of water vapor is passed through the array of light-absorbing and heat transferring substantially monocrystalline ceramic elements, and, at step 209, water vapor stream is in turn heated to approximately 1800°C by a combination of convection, conduction and also by direct absorption of reradiated light. At step 201, the superheated stream of water vapor exits the holder through pores and/or channels formed in it and is thereby directed to the next stage of processing at ultra-high temperatures.

Many strategies may optimize or otherwise enhance the heat transfer from the substantially light-absorbing and heat transferring elements to the fluid. For example, the monocrystalline ceramic light-absorbing and heat transferring elements 106 may comprise a plurality of elements with high surface area to volume ratios to maximize convective heat transfer. Additionally, multiple different sizes and shapes may be used to further optimize heat transfer or light absorption. Besides zirconia, some examples of other potentially useful materials include hafnia, alumina, yttria and ceria, and mixtures thereof.

The thermal decomposition of water is just one example of a process that can be facilitated by this invention. Essentially any solar driven high temperature process could be applicable. Other examples of processes outside of the scope of the present invention, but that could benefit from the present invention include the direct solar powered gasification of biomass and the pyrolysis of carbon dioxide. Essentially any solar driven process that requires ultra-high fluid temperatures could utilize the present invention. In fact, the present invention may be applied to any conversion of light to thermal energy to heat any medium to ultra-high temperatures as a part of any process.

**Claims**

1. A system (100) for using focused light to heat a fluid to ultra-high temperatures, the system comprising:

   a light concentrator selectively positioned to direct concentrated light (103) onto one or more monocrystalline ceramic oxide elements (106),
   wherein the monocrystalline ceramic oxide elements (106) are either naturally white or lightly colored and have been doped to include other atoms that provide for light absorption,
   wherein each of the one or more monocrystalline ceramic oxide elements (106) is capable of absorbing said concentrated light in order to reach a temperature that thermally decomposes water.

2. The system (100) of claim 1, where the concentrator focuses sunlight or where the concentrator is a laser beam.

3. The system (100) of claim 1, where grain boundaries are absent from the monocrystalline ceramic oxide elements.

4. The system (100) of claim 1 and 3, further comprising a holder (107) for the one or more monocrystalline ceramic oxide elements that defines channels configured to pass fluid at the desired ultrahigh temperatures, wherein the holder (107) comprises porous ceramic fiberboard, ceramic cloth, molded ceramic powder or combinations thereof.

5. The system (100) of claim 1, wherein the one or more monocrystalline ceramic oxide elements (106) comprise cubic zirconia.

6. The system of claim 1, wherein the one or more monocrystalline ceramic oxide elements (106) are each smaller than a width of the concentrated light beam when it reaches the holder (107).

7. The system of claim 1, wherein the one or more monocrystalline ceramic oxide elements (106) comprises monocrystalline stabilized cubic zirconia doped with dopants that enhances its sunlight absorption properties, wherein the dopants comprise at least one of cobalt, neodymium, vanadium, titanium, copper, cerium, iron, nickel, praseodymium, erbium, europium, holmium chromium, manganese or combinations thereof.

8. The system of claim 7, wherein the monocrystalline stabilized cubic zirconia has been grown with excess yttrium oxide to produce a green or blue crystal.

9. The system (100) of claim 1, wherein the desired temperature that thermally decomposes water is at least 1800°C, and the system operates at a pressure of at least about 10 atmospheres.

10. The system (100) of claim 1, wherein the monocrystalline ceramic oxide elements (106) are less absorptive on the top, where light enters the crystal, and more absorptive on the bottom.

**11.** The system (100) of claim 1, wherein the monocrystalline ceramic oxide elements (106) are stacked such that in one or more stacks the top element, where light enters the stack, is less absorptive than the bottom element, or wherein the monocrystalline ceramic oxide elements (106) are shaped like rods, cubes, spheres, disks, bars or combinations thereof.

**12.** A method for using focused light to heat a fluid to ultra-high temperatures with a system according to any one of claims 1 to 11, said method comprising:

applying concentrated light onto one or more monocrystalline ceramic oxide elements (106), each of the one or more monocrystalline ceramic oxide elements being capable of absorbing said concentrated light in order to reach a temperature that thermally decomposes water.

**13.** The method of claim 12, where the light comprises a laser.

**14.** The method of claim 12, wherein the one or more monocrystalline ceramic oxide elements are in a holder (107) that defines channels configured to pass fluid at the desired temperatures that thermally decompose water.

**15.** The method of claim 12,
wherein the one or more monocrystalline ceramic oxide elements (106) are each smaller than a width of the concentrated light beam when it reaches the holder (107).


**Patentansprüche**

**1.** System (100) zum Verwenden von fokussiertem Licht zum Erwärmen eines Fluids auf ultrahohe Temperaturen, wobei das System umfasst:

einen Lichtkonzentrator, der selektiv positioniert ist, um konzentriertes Licht (103) auf ein oder mehrere monokristalline Keramikoxidelemente (106) zu lenken,
wobei die monokristallinen Keramikoxidelemente (106) entweder natürlich weiß oder leicht gefärbt sind und dotiert wurden, um andere Atome einzuarbeiten, die für Lichtabsorption sorgen,
wobei jedes von dem einen oder mehreren monokristallinen Keramikoxidelementen (106) in der Lage ist, das konzentrierte Licht zu absorbieren, um eine Temperatur zu erreichen, die Wasser thermisch zerlegt.

**2.** System (100) nach Anspruch 1, wobei der Konzentrator Sonnenlicht fokussiert, oder wobei der Konzentrator ein Laserstrahl ist.

**3.** System (100) nach Anspruch 1, wobei Korngrenzen in den monokristallinen Keramikoxidelementen fehlen.

**4.** System (100) nach Anspruch 1 und 3, des Weiteren umfassend einen Halter (107) für das eine oder die mehreren monokristallinen Keramikoxidelemente, die Kanäle definieren, die ausgestaltet sind, um Fluid bei den gewünschten ultrahohen Temperaturen hindurchzuleiten, wobei der Halter (107) poröse Keramikfaserplatte, Keramiktuch, geformtes Keramikpulver oder Kombinationen davon umfasst.

**5.** System (100) nach Anspruch 1, wobei das eine oder die mehreren monokristallinen Keramikoxidelemente (106) kubisches Zirconiumdioxid umfassen.

**6.** System nach Anspruch 1, wobei das eine oder die mehreren monokristallinen Keramikoxidelemente (106) jeweils kleiner als eine Breite des konzentrierten Lichtstrahls sind, wenn er den Halter (107) erreicht.

**7.** System nach Anspruch 1, wobei das eine oder die mehreren monokristallinen Keramikoxidelemente (106) monokristallines stabilisiertes kubisches Zirconiumdioxid, dotiert mit Dotiermitteln, umfassen, die deren Sonnenlichtabsorptionseigenschaften erhöhen, wobei die Dotiermittel mindestens eines von Kobalt, Neodym, Vanadium, Titan, Kupfer, Cer, Eisen, Nickel, Praseodym, Erbium, Europium, Holmium-Chrom, Mangan oder Kombinationen davon umfassen.

**8.** System nach Anspruch 7, wobei das monokristalline stabilisierte kubische Zirconiumdioxid mit Yttriumoxid im Überschuss gezüchtet worden ist, um einen grünen oder blauen Kristall zu produzieren.

**9.** System (100) nach Anspruch 1, wobei die gewünschte Temperatur, die thermisch Wasser zerlegt, mindestens 1800 °C beträgt und das System mit einem Druck von mindestens etwa 10 Atmosphären arbeitet.

**10.** System (100) nach Anspruch 1, wobei die monokristallinen Keramikoxidelemente (106) obenauf weniger absorbierend sind, wo Licht in den Kristall eintritt, und zuunterst stärker absorbierend sind.

**11.** System (100) nach Anspruch 1, wobei die monokristallinen Keramikoxidelemente (106) gestapelt sind, so dass in einem oder mehreren Stapeln das oberste Element, wo Licht in den Stapel eintritt, weniger absorbierend als das unterste Element ist, oder wobei die monokristallinen Keramikoxidelemente (106) wie Stangen, Würfel, Kugeln, Scheiben, Stäbe oder Kombinationen davon geformt sind.

**12.** Verfahren zur Verwendung von fokussiertem Licht zum Erwärmen eines Fluids auf ultrahohe Temperaturen mit einem System nach einem der Ansprüche 1 bis 11, wobei das Verfahren umfasst:

Anwenden von konzentriertem Licht auf ein oder mehrere monokristalline Keramikoxidelemente (106), wobei jedes von dem einen oder mehreren monokristallinen Keramikoxidelementen in der Lage ist, das konzentrierte Licht zu absorbieren, um eine Temperatur zu erreichen, die Wasser thermisch zerlegt.

**13.** Verfahren nach Anspruch 12, wobei das Licht einen Laser umfasst.

**14.** Verfahren nach Anspruch 12, wobei das eine oder die mehreren monokristallinen Keramikoxidelemente in einem Halter (107) sind, der Kanäle definiert, die ausgestaltet sind, um Fluid mit den gewünschten Temperaturen hindurchzuleiten, die Wasser thermisch zerlegen.

**15.** Verfahren nach Anspruch 12, wobei das eine oder die mehreren monokristallinen Keramikoxidelemente (106) jeweils kleiner als eine Breite des konzentrierten Lichtstrahls sind, wenn er den Halter (107) erreicht.

## Revendications

**1.** Système (100) destiné à utiliser de la lumière focalisée pour chauffer un fluide jusqu'à des températures ultra-hautes, le système comprenant :

un concentrateur de lumière sélectivement positionné pour diriger de la lumière concentrée (103) sur un ou plusieurs éléments en oxyde céramique monocristallin (106),
les éléments en oxyde céramique monocristallin (106) étant soit naturellement blancs, soit légèrement colorés, et ayant été dopés pour comporter d'autres atomes qui assurent l'absorption de la lumière,
dans lequel l'élément ou chacun des éléments en oxyde céramique monocristallin (106) peuvent absorber ladite lumière concentrée afin d'atteindre une température qui décompose thermiquement l'eau.

**2.** Système (100) de la revendication 1, dans lequel le concentrateur focalise la lumière du soleil ou dans lequel le concentrateur est un faisceau laser.

**3.** Système (100) de la revendication 1, dans lequel des joints de grains sont absents des éléments en oxyde céramique monocristallin.

**4.** Système (100) de la revendication 1 et 3, comprenant en outre un support (107) pour le ou les éléments en oxyde céramique monocristallin qui définit des canaux configurés pour laisser passer un fluide aux températures ultra-hautes souhaitées, le support (107) comprenant un panneau de fibres de céramique poreuse, une toile de céramique, une poudre de céramique moulée ou une combinaison de ceux-ci.

**5.** Système (100) de la revendication 1, dans lequel le ou les éléments en oxyde céramique monocristallin (106) comprennent de la zircone cubique.

**6.** Système de la revendication 1, dans lequel le ou les éléments en oxyde céramique monocristallin (106) sont chacun plus petits qu'une largeur du faisceau lumineux concentré quand il atteint le support (107).

7. Système de la revendication 1, dans lequel le ou les éléments en oxyde céramique monocristallin (106) comprennent de la zircone cubique stabilisée monocristalline dopée avec des dopants qui améliorent ses propriétés d'absorption de la lumière du soleil, les dopants comprenant au moins un élément parmi le cobalt, le néodyme, le vanadium, le titane, le cuivre, le cérium, le fer, le nickel, le praséodyme, l'erbium, l'europium, l'holmium, le chrome, le manganèse, ou une combinaison de ceux-ci.

8. Système de la revendication 7, dans lequel la zircone cubique stabilisée monocristalline a été élaborée avec un excès d'oxyde d'yttrium pour produire un cristal vert ou bleu.

9. Système (100) de la revendication 1, la température souhaitée qui décompose thermiquement l'eau étant d'au moins 1800 °C, et le système fonctionnant à une pression d'au moins 10 atmosphères environ.

10. Système (100) de la revendication 1, dans lequel les éléments en oxyde céramique monocristallin (106) sont moins absorbants sur le dessus, où la lumière pénètre dans le cristal, et plus absorbants sur le dessous.

11. Système (100) de la revendication 1, dans lequel les éléments en oxyde céramique monocristallin (106) sont empilés de telle sorte que, dans un ou plusieurs empilements, l'élément de dessus, où la lumière pénètre dans l'empilement, est moins absorbant que l'élément de dessous, ou
dans lequel les éléments en oxyde céramique monocristallin (106) sont façonnés comme des tiges, des cubes, des sphères, des disques, des barres, ou une combinaison de ceux-ci.

12. Procédé d'utilisation de lumière focalisée pour chauffer un fluide jusqu'à des températures ultra-hautes avec un système selon l'une quelconque des revendications 1 à 11, ledit procédé comprenant :

l'application de lumière concentrée sur un ou plusieurs éléments en oxyde céramique monocristallin (106), l'élément ou chacun des éléments en oxyde céramique monocristallin pouvant absorber ladite lumière concentrée afin d'atteindre une température qui décompose thermiquement l'eau.

13. Procédé de la revendication 12, dans lequel la lumière constitue un laser.

14. Procédé de la revendication 12, dans lequel le ou les éléments en oxyde céramique monocristallin se trouvent dans un support (107) qui définit des canaux configurés pour laisser passer un fluide aux températures souhaitées qui décomposent thermiquement l'eau.

15. Procédé de la revendication 12, dans lequel le ou les éléments en oxyde céramique monocristallin (106) sont chacun plus petits qu'une largeur du faisceau lumineux concentré quand il atteint le support (107).

EP 3 278 037 B1

FIGURE 1   100

201 A boule of color-doped single crystal refractory material such as cubic zirconia is grown by the skull melting method

202 Target elements are sawn from the boule and polished on at least 1 face by conventional methods

203 A pocket is formed in a refractory porous ceramic fiberboard block

204 Channels are drilled in the bottom of the pocket

205 One or more dark, single crystal target elements is added to the holder

206 Light is collected and focused by a parabolic reflector

207 Focused light is directed onto holder and its contents

208 Water vapor is passed through holder and is heated by the target elements

209 Heat transfers from the target elements to the water vapor

210 Heated water vapor is directed to the next stage of the processing system through the channels formed in the holder

200

FIGURE 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 67321015
- US 8709132 B1

- US 4696809 A